# EUROPÄISCHE PATENTANMELDUNG

(11) **EP 4 287 043 A1**
(43) Veröffentlichungstag der Anmeldung: **06.12.2023**
(21) Anmeldenummer: 22177294.0
(22) Anmeldetag: 03.06.2022
(51) Int. Cl.: G06F 16/9538, G06F 3/01

(54) **GENERIERUNG VON HOLOGRAMMEN ZUR DARSTELLUNG IN EINER AUGMENTED REALITY UMGEBUNG**

(71) Anmelder: Siemens Aktiengesellschaft, 80333 München (DE)
(72) Erfinder: Labisch, Daniel, 76149 Karlsruhe (DE); MacWilliams, Asa, 82256 Fürstenfeldbruck (DE); Scherer, Tim, 76185 Karlsruhe (DE)
(74) Vertreter: Siemens Patent Attorneys

(57) **Zusammenfassung**

Vorgeschlagen wird ein Verfahren, umfassend:
- Erfassen einer Umgebung durch ein von einem System umfasstes Bilderfassungsmittel,
- Hinzufügen von Bildinformationen zu der bildlich erfassten Umgebung durch von dem System umfasste Rechenmittel,
- Bildliche Wiedergabe (1) der von den Bilderfassungsmitteln bildlich erfassten Umgebung zusammen mit den von den Rechenmitteln hinzugefügten Bildinformationen durch von dem System umfasste Bildmittel,
wobei die Rechenmittel dazu ausgebildet sind, unter Berücksichtigung einer Position und/oder einer Erfassungsrichtung der Bilderfassungsmittel in der Umgebung befindliche Objekte zu identifizieren.

Das Verfahren ist dadurch gekennzeichnet, dass die Rechenmittel bei einem Anwählen eines Punktes durch einen Nutzer des Systems in der bildlichen Wiedergabe (1) eines oder mehrere Objekte identifizieren, die das Ziel der Anwahl darstellen könnten, und daraufhin ein Hologramm (2, 3, 4, 5, 6, 7, 8, 9, 10, 11) oder eine Mehrzahl von Hologrammen (2, 3, 4, 5, 6, 7, 8, 9, 10, 11) zu erzeugen, welche durch die Bildmittel in der bildlichen Wiedergabe (1) wiedergegeben werden, wobei das Hologramm (2, 3, 4, 5, 6, 7, 8, 9, 10, 11) oder die Hologramme (2, 3, 4, 5, 6, 7, 8, 9, 10, 11) vorzugsweise jeweils Informationen umfassen, die für eine eindeutige Identifikation des jeweiligen identifizierten Objektes notwendig sind.

## Beschreibung

Die Erfindung betrifft ein System mit den Merkmalen des Oberbegriffs des Anspruchs 1 und des Anspruchs 2. Außerdem betrifft die Erfindung eine Verwendung eines solchen Systems und ein Verfahren mit den Merkmalen des Oberbegriffs des Anspruchs 13.

Ein Nutzer einer Augmented Reality (kurz: AR) Anwendung, die auf einem Smartphone, einem Tablet oder einer Datenbrille abläuft, benötigt für den Einsatz der Anwendung in einer Industrieumgebung wie z.B. einer Prozessanlage unterschiedlichste Informationen. Diese werden in an sich bekannter Weise bei AR Anwendungen in Form von sogenannten Hologrammen dargestellt. Ein Hologramm ist dabei ein 2D- oder 3D-Objekt in der AR-Anwendung, das mit verschiedenen Informationen gefüllt werden kann. Das Hologramm stellt dabei eine Art Bilderrahmen dar, der mit Bildern gefüllt werden kann, die der Benutzer bestimmt.

Sinnvollerweise sollten die Hologramme für vorab bekannte und häufige Aufgaben bereits vorab vorbereitet werden, sodass der Nutzer direkt die erforderlichen Informationen erhält. Für neue oder kurzfristige Aufgaben sowie unerwartete Tätigkeiten, aber auch, falls noch Details fehlen, muss der Nutzer weitere Inhalte auch nebenbei generieren können. Dabei liegt der Fokus des Nutzers auf dem eigentlichen Inhalt. Wo und in welchem System der Inhalt bzw. das Hologramm abgelegt ist, ist ihm ggf. gar nicht bekannt.

Die darstellbaren Informationen liegen entweder in einer eigenen Datenbank des zur AR-Anwendung gehörigen AR-Systems, können über verknüpfte Systeme importiert werden oder lassen sich durch eine URL (Uniform Resource Locator) oder einen Pfad direkt ansprechen. Die Ablage und die Navigation erfolgt in den ersten beiden Fällen meist über eine Baumstruktur, die jedoch in der Regel nicht einheitlich aufgebaut ist. Dies und die Vielzahl der möglichen Systeme erschwert das Finden der notwendigen Informationsquellen für den Nutzer im Feld erheblich - oder macht dies sogar unmöglich. Auch die Nutzung eines Pfades oder einer URL, die dem Nutzer im Allgemeinen auch nicht bekannt sind, bringt die genannten Nachteile mit sich.

Der Erfindung liegt die Aufgabe zugrunde, ein System zur Darstellung einer erweiterten Realität anzugeben, das effizienter und einfacher bedient und benutzt werden kann.

Die zuvor formulierte Aufgabe wird durch ein System mit den Merkmalen des Anspruchs 1 und des Anspruchs 2 gelöst. Zudem wird die Aufgabe durch die Verwendung eines solchen Systems gelöst. Darüber hinaus wird die zuvor formulierte Aufgabe durch ein Verfahren mit den Merkmalen des Anspruchs 13 und des Anspruchs 14 gelöst. Vorteilhafte Weiterbildungen sind Gegenstand der abhängigen Ansprüche.

Ein erfindungsgemäßes technisches System umfasst:
- Bilderfassungsmittel, die dazu ausgebildet sind, eine Umgebung bildlich zu erfassen,
- Rechenmittel, die dazu ausgebildet sind, mit Hilfe einer Position und/oder einer Erfassungsrichtung der Bilderfassungsmittel in der Umgebung befindliche Objekte zu identifizieren,
- Bildmittel, die dazu ausgebildet sind, eine grafische Wiedergabe zu erzeugen.

Das System ist dadurch gekennzeichnet, dass die Rechenmittel dazu ausgebildet sind, für jedes identifizierte Objekt ein Hologramm zu erzeugen, wobei das System dazu ausgebildet ist, bei einem Anwählen eines der identifizierten Objekte durch einen Nutzer des Systems in dem dazugehörigen Hologramm eine Information darzustellen, welche den Nutzer darauf hinweist, dass weitere Informationen bezüglich des jeweiligen Objektes verfügbar sind, insbesondere eine Anzahl der weiteren verfügbaren Informationen.

Das System ist in an sich bekannter Weise dazu in der Lage, seine Umgebung durch Bilderfassungsmittel wie eine Fotokamera, eine Videokamera, einem Laserscanner, einem LiDAR-Gerät oder dergleichen zu erfassen und Objekte wie Maschinen, Tanks, Kessel, Rohrleitungen etc. zu erkennen, die in der erfassten Umgebung vorhanden sind. Dabei nehmen die von dem System umfassten Rechenmittel eine Position und/oder eine Erfassungsrichtung der Bilderfassung zu Hilfe, um die erfassten Objekte (eindeutig) zu identifizieren. Für die Identifikation können die Rechenmittel beispielsweise auf eine Anlagendokumentation wie ein Rohrleitungs- und Instrumentierungsschema zurückgreifen.

Das System erzeugt eine bildliche Wiedergabe der durch die Rechenmittel identifizierten Objekte, jeweils in Form eines Hologramms, die als zusätzliche Bildinformationen der eigentlichen Sicht des Nutzers überlagert werden (erweiterte Realität bzw. augmented reality). In dem (Standard-)Hologramm sind vorzugsweise Informationen dargestellt, die für eine Identifikation des identifizierten Objektes notwendig sind, beispielsweise eine ID / Seriennummer oder ein TAG-Namen.

Die eigentliche Sicht des Nutzers kann dabei ein unmittelbarer visueller Eindruck der Umgebung sein (also das was er mit seinen eigenen Augen sieht). Er kann aber auch ein Bild durch die Bildmittel angezeigt bekommen, das aus der bildlichen Erfassung der Bilderfassungsmittel resultiert. Beispielsweise kann er für den Fall, dass die Bilderfassungsmittel als Nachtsichtgerät ausgebildet sind, das von dem Nachtsichtgerät erfasste Bild mit den von den Rechenmitteln identifizierten Objekten durch die Bildmittel dargeboten bekommen. Die Bildmittel geben in diesem Fall nicht nur die von den Rechenmitteln identifizierten Objekte, sondern auch die Erfassung der Bilderfassungsmittel, beispielsweise als zweidimensionales Bild auf einem Smartphone, einem Tablet oder einer Datenbrille, dem Nutzer des Systems wieder.

In besonders vorteilhafter Art und Weise sind die Rechenmittel dazu ausgebildet, bei einem Anwählen eines identifizierten Objektes (genauer: beim Anwählen des Hologramms des Objektes) durch einen Nutzer des Systems in dem dazugehörigen Hologramm eine Information darzustellen, welche den Nutzer darauf hinweist, dass weitere Informationen bezüglich des jeweiligen Objektes verfügbar sind, insbesondere eine Anzahl der weiteren verfügbaren Informationen. Mit anderen Worten kann der Nutzer des Systems durch das Anwählen eines identifizierten Objektes direkt eine Information in dem Hologramm erzeugen, das das Hologramm mit weiteren Informationen füllbar ist, welche das identifizierte Objekt betreffen.

Für den Fall einer Datenbrille kann der Nutzer das identifizierte Objekt beispielsweise dadurch auswählen, dass er mit einer entsprechenden Geste seiner Hand oder eines seiner Finger auf das virtuell vor ihm befindliche identifizierte Objekt "tippt". Die Bilderfassungsmittel erkennen in Verbindung mit den Rechenmitteln diese Geste als eine Anwahl des Nutzers, die die Erzeugung des entsprechenden Hologramms triggert. Für den Fall eines Smartphones kann der Nutzer auf das von dem Bildschirm des Smartphones dargestellte identifizierte Objekt "tippen", wobei die Anwahl hier in der Regel über Kapazitätsänderungen erkannt und weiterverarbeitet wird.

Die Rechenmittel können vollständig in demselben Gerät angeordnet sein wie die Bildmittel und die Bilderfassungsmittel. Vor allem Smartphones und Tablets können über die notwendige Rechenleistung verfügen, um die notwendigen Identifikationsund Grafikoperationen durchzuführen. Es kann aber auch möglich sein, dass die Rechenmittel teilweise oder ganz von den Bilderfassungsmitteln und den Bildmitteln getrennt ausgebildet sind, bevorzugt in einer cloudbasierten Umgebung. Beispielsweise für den Fall, dass eine Datenbrille verwendet wird, kann die Rechenkapazität der Datenbrille nicht ausreichen, weshalb die rechenintensiven Identifikations- und Grafikoperationen auf einer von der Datenbrille (physikalisch) getrennten Recheneinrichtung (einem Rechner, Server, Rechnerverbund etc.) ausgeführt werden. Die Datenbrille bekommt dabei von der Recheneinrichtung die notwendigen grafischen Informationen, um die identifizierten Objekte und das oder die Hologramme in der erweiterten Realität visuell darzustellen. Dabei kann die Datenbrille selbst einen Teil der Rechenmittel aufweisen, um die von der externen Recheneinrichtung empfangenen Informationen zu verarbeiten.

Die zuvor formulierte Aufgabe wird gleichfalls durch ein System mit dem gleichen Oberbegriff wie zuvor erläutert, welches jedoch dadurch gekennzeichnet ist, dass die Rechenmittel dazu ausgebildet sind, bei einem Anwählen eines Punktes durch einen Nutzer des Systems in der bildlichen Wiedergabe eines oder mehrere Objekte zu identifizieren, die das Ziel der Anwahl darstellen könnten, und ein Hologramm oder eine Mehrzahl von Hologrammen zu erzeugen, wobei das Hologramm oder die Hologramme vorzugsweise jeweils Informationen umfassen, die für eine eindeutige Identifikation des jeweiligen identifizierten Objektes notwendig sind.

Während bei dem zuerst erläuterten erfindungsgemäßen System die Rechenmittel zuerst die Identifikation des oder der Objekte in der Umgebung des Systems vornehmen und der Nutzer daraufhin das für ihn interessante Objekte auswählt, führt das zuletzt genannte System die Identifikation erst auf Initiative des Nutzers aus, welcher einen Punkt in der bildlichen Wiedergabe des Systems auswählt, woraufhin die Rechenmittel das oder die Objekte identifizieren, welche das Ziel der Anwahl darstellen könnten. Mit anderen Worten "tippt" der Nutzer auf einen Bereich der Umgebung, wo sich seiner Meinung nach ein für ihn interessantes Objekt befindet, woraufhin die Rechenmittel ermitteln, welches Objekt er gemeint haben könnte.

Bevorzugt sind die Rechenmittel dabei dazu ausgebildet, von dem Nutzer eine Angabe darüber zu erfragen, welches Objekt der mehreren identifizierten Objekte das Ziel der Anwahl darstellt. Mit anderen Worten fragen die Rechenmittel für den Fall, dass mehrere mögliche in Frage kommenden Objekte identifiziert werden, eine Angabe des Nutzers ab, welches Objekt er auszuwählen beabsichtigt hat.

Die Rechenmittel können dabei dazu ausgebildet sein, bei der Identifikation der als Ziel der Auswahl in Frage kommenden Objekte eine Position der Objekte relativ zu einer virtuellen Verbindungslinie zwischen dem angewählten Punkt und der Position des Bilderfassungsmittels zu berücksichtigen. Die Rechenmittel identifizieren dabei beispielsweise alle Objekte, die innerhalb eines bestimmten Abstandes um die Verbindungslinie in der Umgebung (real) angeordnet sind und ermitteln dabei einen Abstand des jeweiligen Objektes, wobei die Rechenmittel diejenigen Objekte, die einen verhältnismäßig geringen Abstand aufweisen, als potenziell am interessantesten für den Nutzer kennzeichnen können (hervorgehobene Darstellung durch Blinken, Vergrößerung, Farbgebung etc.). Die Darstellung der in Frage kommenden Objekte kann in Form einer Liste erfolgen, die beispielsweise nach dem Abstand zu der Verbindungslinie sortiert sein kann. Die Rechenmittel können aber auch nur ein einziges Objekt, insbesondere das mit dem geringsten Abstand zu der Verbindungslinie, für die bildliche Wiedergabe vorsehen.

Bevorzugt ist das System dazu ausgebildet, die Information, welche den Nutzer darauf hinweist, dass weitere Informationen bezüglich des jeweiligen Objektes verfügbar sind, in einem zusätzlichen Hologramm darzustellen, und eine Verbindungslinie zwischen einem jeweiligen zusätzlichen Hologramm und dem Hologramm des jeweiligen Objektes zu erzeugen. Diese Verbindungslinie bzw. die Verbindungslinien können der besseren Orientierung des Nutzers dienen, da dieser durch die Verbindungslinien "auf einen Blick" erfasst kann, zu welchem Objekt bzw. welchem Hologramm das zusätzliche Hologramm mit der Information über die zusätzlichen Informationen gehörig ist.

Besonders bevorzugt ist das System dazu ausgebildet, das Hologramm oder die Hologramme und/oder die zusätzlichen Hologramme von dem Nutzer in der bildlichen Wiedergabe verschiebbar auszubilden. Dadurch kann der Nutzer das oder die Hologramme an der oder den von ihm bevorzugten Positionen verankern.

Das System kann alternativ oder zusätzlich dazu ausgebildet sein, das Hologramm oder die Hologramme und/oder die zusätzlichen Hologramme automatisch an einer vorgegebenen oder vorgebbaren Position relativ zu dem dazugehörigen Objekt oder den dazugehörigen Objekten in der bildlichen Wiedergabe anzuzeigen. Die manuelle Verschiebemöglichkeit, die zuvor erläutert wurde, kann als zusätzliches Merkmal vorhanden sein, um dem Nutzer eine Änderungsmöglichkeit zu bieten, falls die automatische Anordnung für ihn nicht optimal ist.

Im Rahmen einer vorteilhaften Weiterbildung der Erfindung ist das System dazu ausgebildet, die in dem zusätzlichen Hologramm dargestellten weiteren Informationen in einer strukturierten Form darzustellen. Speziell im Fall von vielen weiteren Informationen ist eine Gliederung mittels einer Baumstruktur besonders vorteilhaft. Dabei sollte sich die Gliederung an für den Nutzer logischen Kriterien orientieren, beispielsweise Dokumente, Listen, Workflows, Live-Daten, historische Daten etc.

Bevorzugt ist das System dazu ausgebildet, in der grafischen Wiedergabe eine Suchfunktionalität bereitzustellen, mittels der der Nutzer nach bestimmten Informationen bezüglich des identifizierten Objektes oder der identifizierten Objekte suchen kann. Die Suchfunktionalität kann dabei beispielsweise auf eine Datenbank eines Leitsystems einer technischen Anlage wie einer Fertigungsanlage oder einer Prozessanlage zugreifen.

Die zuvor formulierte Aufgabe wird zudem gelöst durch die Verwendung eines Systems wie zuvor beschrieben durch einen Nutzer innerhalb einer technischen Anlage, insbesondere Prozessanlage oder Fertigungsanlage. Der Nutzer kann das System vorteilhafterweise dafür verwenden, um gezielt Informationen über einzelne Objekte der technischen Anlage wie ein Motor, eine Pumpe, einen Tank, einen Stellregler oder dergleichen abzurufen und sich intuitiv in einer erweiterten Realität darstellen zu lassen.

Diese technischen Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst.

Die zuvor formulierte Aufgabe wird gleichsam gelöst durch ein Verfahren, umfassend:
- Erfassen einer Umgebung durch ein von einem System umfasstes Bilderfassungsmittel,
- Hinzufügen von Bildinformationen zu der bildlich erfassten Umgebung durch von dem System umfasste Rechenmittel,
- Grafische Wiedergabe der von den Bilderfassungsmitteln bildlich erfassten Umgebung zusammen mit den von den Rechenmitteln hinzugefügten Bildinformationen durch von dem System umfasste Bildmittel,
wobei die Rechenmittel dazu ausgebildet sind, unter Berücksichtigung einer Position und/oder einer Erfassungsrichtung der Bilderfassungsmittel in der Umgebung befindliche Objekte zu identifizieren.

Das Verfahren ist dadurch gekennzeichnet, dass die Rechenmittel für jedes identifizierte Objekt ein Hologramm erzeugen, welches durch die Bildmittel in der bildlichen Wiedergabe wiedergegeben wird, und welches vorzugsweise Informationen umfasst, die für eine eindeutige Identifikation des identifizierten Objektes notwendig sind,
wobei das System bei einem Anwählen eines der identifizierten Objekte durch einen Nutzer des Systems eine Information darstellt, welche den Nutzer darauf hinweist, dass weitere Informationen bezüglich des jeweiligen Objektes verfügbar sind, insbesondere eine Anzahl der weiteren verfügbaren Informationen.

Außerdem wird die zuvor formulierte Aufgabe gelöst durch ein Verfahren, umfassend:
- Erfassen einer Umgebung durch ein von einem System umfasstes Bilderfassungsmittel,
- Hinzufügen von Bildinformationen zu der bildlich erfassten Umgebung durch von dem System umfasste Rechenmittel,
- Grafische Wiedergabe der von den Bilderfassungsmitteln bildlich erfassten Umgebung zusammen mit den von den Rechenmitteln hinzugefügten Bildinformationen durch von dem System umfasste Bildmittel,
wobei die Rechenmittel dazu ausgebildet sind, unter Berücksichtigung einer Position und/oder einer Erfassungsrichtung der Bilderfassungsmittel in der Umgebung befindliche Objekte zu identifizieren.

Das Verfahren ist dadurch gekennzeichnet, dass die Rechenmittel bei einem Anwählen eines Punktes durch einen Nutzer des Systems in der bildlichen Wiedergabe eines oder mehrere Objekte identifizieren, die das Ziel der Anwahl darstellen könnten, und daraufhin ein Hologramm oder eine Mehrzahl von Hologrammen erzeugen, welche durch die Bildmittel in der bildlichen Wiedergabe wiedergegeben werden, wobei das Hologramm oder die Hologramme vorzugsweise jeweils Informationen umfassen, die für eine eindeutige Identifikation des jeweiligen identifizierten Objektes notwendig sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird.

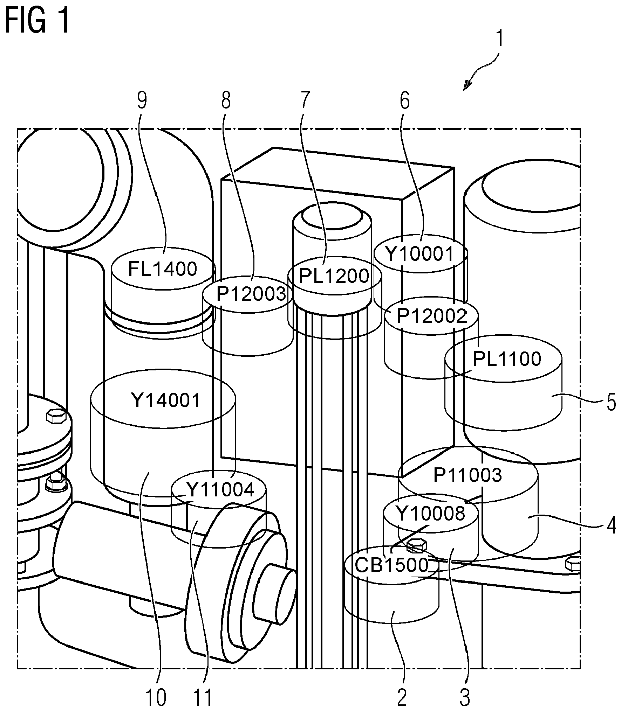

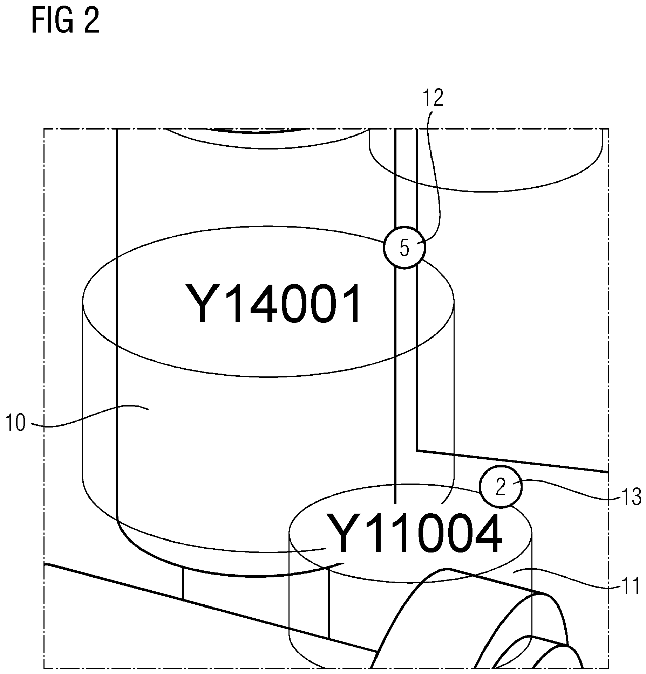

FIG 1 zeigt eine bildliche Wiedergabe 1 eines erfindungsgemäßen Systems, die einem Nutzer des Systems von Bildmitteln des Systems wie einer Datenbrille oder einem Smartphonebildschirm dargeboten wird. Der Nutzer befindet sich in diesem Beispiel in einer Umgebung innerhalb einer Prozessanlage und sieht eine Vielzahl von Prozessobjekten. Das System hat die Prozessobjekte, die von dem Nutzer erkannt werden können bzw. die sich in der Blickrichtung der Bilderfassungsmittel des Systems befinden, bereits identifiziert und stellt für jedes identifizierte Prozessobjekt ein Hologramm 2, 3, 4, 5, 6, 7, 8, 9, 10, 11 dar. Das Hologramm 2, 3, 4, 5, 6, 7, 8, 9, 10, 11 umfasst dabei jeweils einen zylindrischen Körper und eine eindeutige Kennung des dazugehörigen Objektes (FL1400, PL1200, CB1500,..).

Wählt ein Nutzer das Hologramm 10 "Y14001" und das Hologramm 11 "Y11004" beispielsweise durch ein "Anklicken" in der bildlichen Wiedergabe aus, erzeugt und stellt das System jeweils eine Information 12, 13 dar, welche den Nutzer darauf hinweist, dass weitere Informationen bezüglich des jeweiligen Prozessobjektes verfügbar sind. Dabei handelt es sich bei diesen Informationen 12, 13 jeweils um eine Anzahl der weiteren verfügbaren Informationen. Die Informationen 12, 13 sind dabei vorliegend als Erweiterungen der Hologramme 10, 11 ausgebildet. Sie können aber auch als zusätzliche, von den Hologrammen 10, 11 unabhängige Hologramme ausgebildet sein.

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Technisches System, umfassend:
- Bilderfassungsmittel, die dazu ausgebildet sind, eine Umgebung bildlich zu erfassen,
- Rechenmittel, die dazu ausgebildet sind, mit Hilfe einer Position und/oder einer Erfassungsrichtung der Bilderfassungsmittel in der Umgebung befindliche Objekte zu identifizieren,
- Bildmittel, die dazu ausgebildet sind, eine bildliche Wiedergabe (1) zu erzeugen,
**dadurch gekennzeichnet, dass**
die Rechenmittel dazu ausgebildet sind, für jedes identifizierte Objekt ein Hologramm (2, 3, 4, 5, 6, 7, 8, 9, 10, 11) zu erzeugen, welches vorzugsweise Informationen umfasst, die für eine eindeutige Identifikation des identifizierten Objektes notwendig sind,
und wobei das System dazu ausgebildet ist, bei einem Anwählen eines der identifizierten Objekte durch einen Nutzer des Systems eine Information in der bildlichen Wiedergabe (1) darzustellen, welche den Nutzer darauf hinweist, dass weitere Informationen (12, 13) bezüglich des jeweiligen Objektes verfügbar sind, insbesondere eine Anzahl oder eine listenförmige Darstellung der weiteren verfügbaren Informationen.

2. Technisches System, umfassend:
- Bilderfassungsmittel, die dazu ausgebildet sind, eine Umgebung bildlich zu erfassen,
- Rechenmittel, die dazu ausgebildet sind, mit Hilfe einer Position und/oder einer Erfassungsrichtung der Bilderfassungsmittel in der Umgebung befindliche Objekte zu identifizieren,
- Bildmittel, die dazu ausgebildet sind, eine bildliche Wiedergabe (1) zu erzeugen,
**dadurch gekennzeichnet, dass**
die Rechenmittel dazu ausgebildet sind, bei einem Anwählen eines Punktes durch einen Nutzer des Systems in der bildlichen Wiedergabe (1) eines oder mehrere Objekte zu identifizieren, die das Ziel der Anwahl darstellen könnten, und ein Hologramm (2, 3, 4, 5, 6, 7, 8, 9, 10, 11) oder eine Mehrzahl von Hologrammen (2, 3, 4, 5, 6, 7, 8, 9, 10, 11) in der bildlichen Wiedergabe (1) zu erzeugen, wobei das Hologramm oder die Hologramme (2, 3, 4, 5, 6, 7, 8, 9, 10, 11) vorzugsweise jeweils Informationen umfassen, die für eine eindeutige Identifikation des jeweiligen identifizierten Objektes notwendig sind.

3. Technisches System nach Anspruch 2, bei dem die Rechenmittel dazu ausgebildet sind, von dem Nutzer eine Angabe darüber zu erfragen, welches Objekt der mehreren identifizierten Objekte das Ziel der Anwahl darstellt, wobei das System dazu ausgebildet ist, bei einem Anwählen eines der identifizierten Objekte durch den Nutzer in der bildlichen Wiedergabe (1) eine Information (12, 13) darzustellen, welche den Nutzer darauf hinweist, dass weitere Informationen bezüglich des jeweiligen Objektes verfügbar sind, insbesondere eine Anzahl der weiteren verfügbaren Informationen.

4. Technisches System nach Anspruch 2 oder nach Anspruch 2 und 3, bei dem die Rechenmittel dazu ausgebildet sind, bei der Identifikation der als Ziel der Auswahl in Frage kommenden Objekte eine Position der Objekte relativ zu einer virtuellen Verbindungslinie zwischen dem angewählten Punkt und der Position des Bilderfassungsmittels zu berücksichtigen.

5. Technisches System nach einem der Ansprüche 1 bis 4, das dazu ausgebildet ist, die Information (12, 13), welche den Nutzer darauf hinweist, dass weitere Informationen bezüglich des jeweiligen Objektes verfügbar sind, in einem zusätzlichen Hologramm in der bildlichen Wiedergabe (1) darzustellen, und eine Verbindungslinie zwischen einem jeweiligen zusätzlichen Hologramm und dem Hologramm (2, 3, 4, 5, 6, 7, 8, 9, 10, 11) des jeweiligen Objektes zu erzeugen und in der bildlichen Wiedergabe (1) darzustellen.

6. Technisches System nach einem der Ansprüche 1 bis 5, das dazu ausgebildet ist, das Hologramm (2, 3, 4, 5, 6, 7, 8, 9, 10, 11) oder die Hologramme (2, 3, 4, 5, 6, 7, 8, 9, 10, 11) und/oder die zusätzlichen Hologramme von dem Nutzer in der bildlichen Wiedergabe (1) verschiebbar auszubilden.

7. Technisches System nach einem der Ansprüche 1 bis 6, das dazu ausgebildet ist, das Hologramm (2, 3, 4, 5, 6, 7, 8, 9, 10, 11) oder die Hologramme (2, 3, 4, 5, 6, 7, 8, 9, 10, 11) und/oder die zusätzlichen Hologramme automatisch an einer vorgegebenen oder vorgebbaren Position relativ zu dem dazugehörigen Objekt oder den dazugehörigen Objekten in der bildlichen Wiedergabe (1) darzustellen.

8. Technisches System nach einem der vorangegangenen Ansprüche, das dazu ausgebildet ist, die in dem zusätzlichen Hologramm dargestellten weiteren Informationen (12, 13) in einer strukturierten Form darzustellen.

9. Technisches System nach einem der vorangegangenen Ansprüche, das dazu ausgebildet ist, in der grafischen Wiedergabe (1) eine Suchfunktionalität bereitzustellen, mittels der der Nutzer nach bestimmten Informationen bezüglich des identifizierten Objektes oder der identifizierten Objekte suchen kann.

10. Technisches System nach einem der vorangegangenen Ansprüche, bei dem die Bilderfassungsmittel und die Bildmittel in einem Smartphone, einem Tablet oder in einer Datenbrille angeordnet sind.

11. Technisches System nach Anspruch 10, bei dem die Rechenmittel teilweise oder ganz von den Bilderfassungsmitteln und den Bildmitteln getrennt ausgebildet sind, bevorzugt in einer cloudbasierten Umgebung.

12. Verwendung eines technischen Systems nach einem der vorangegangenen Ansprüche durch einen Nutzer innerhalb einer technischen Anlage, insbesondere Prozessanlage oder Fertigungsanlage.

13. Verfahren, umfassend:
- Erfassen einer Umgebung durch ein von einem technischen System umfasstes Bilderfassungsmittel,
- Hinzufügen von Bildinformationen zu der bildlich erfassten Umgebung durch von dem technischen System umfasste Rechenmittel,
- Bildliche Wiedergabe (1) der von den Bilderfassungsmitteln bildlich erfassten Umgebung zusammen mit den von den Rechenmitteln hinzugefügten Bildinformationen durch von dem technischen System umfasste Bildmittel,
wobei die Rechenmittel dazu ausgebildet sind, unter Berücksichtigung einer Position und/oder einer Erfassungsrichtung der Bilderfassungsmittel in der Umgebung befindliche Objekte zu identifizieren,
**dadurch gekennzeichnet, dass**
die Rechenmittel für jedes identifizierte Objekt ein Hologramm (2, 3, 4, 5, 6, 7, 8, 9, 10, 11) erzeugen, welches durch die Bildmittel in der bildlichen Wiedergabe (1) wiedergegeben wird, und welches vorzugsweise Informationen umfasst, die für eine eindeutige Identifikation des identifizierten Objektes notwendig sind,
wobei das technische System bei einem Anwählen eines der identifizierten Objekte durch einen Nutzer des technischen Systems in der bildlichen Wiedergabe (1) eine Information (12, 13) darstellt, welche den Nutzer darauf hinweist, dass weitere Informationen bezüglich des jeweiligen Objektes verfügbar sind, insbesondere eine Anzahl der weiteren verfügbaren Informationen.

14. Verfahren, umfassend:
- Erfassen einer Umgebung durch ein von einem technischen System umfasstes Bilderfassungsmittel,
- Hinzufügen von Bildinformationen zu der bildlich erfassten Umgebung durch von dem technischen System umfasste Rechenmittel,
- Bildliche Wiedergabe (1) der von den Bilderfassungsmitteln bildlich erfassten Umgebung zusammen mit den von den Rechenmitteln hinzugefügten Bildinformationen durch von dem technischen System umfasste Bildmittel,
wobei die Rechenmittel dazu ausgebildet sind, unter Berücksichtigung einer Position und/oder einer Erfassungsrichtung der Bilderfassungsmittel in der Umgebung befindliche Objekte zu identifizieren,
**dadurch gekennzeichnet, dass**
die Rechenmittel bei einem Anwählen eines Punktes durch einen Nutzer des technischen Systems in der bildlichen Wiedergabe (1) eines oder mehrere Objekte identifizieren, die das Ziel der Anwahl darstellen könnten, und daraufhin ein Hologramm (2, 3, 4, 5, 6, 7, 8, 9, 10, 11) oder eine Mehrzahl von Hologrammen (2, 3, 4, 5, 6, 7, 8, 9, 10, 11) zu erzeugen, welche durch die Bildmittel in der bildlichen Wiedergabe (1) wiedergegeben werden, wobei das Hologramm (2, 3, 4, 5, 6, 7, 8, 9, 10, 11) oder die Hologramme (2, 3, 4, 5, 6, 7, 8, 9, 10, 11) vorzugsweise jeweils Informationen umfassen, die für eine eindeutige Identifikation des jeweiligen identifizierten Objektes notwendig sind.
